# EUROPEAN PATENT SPECIFICATION

(11) **EP 4 173 917 B1**
(45) Date of publication and mention of the grant of the patent: **04.12.2024**
(21) Application number: 22203630.3
(22) Date of filing: 25.10.2022
(51) Int. Cl.: B60W 30/18, B62D 15/02, G06N 3/02, B60W 60/00

(54) **LANE CHANGE METHOD AND SYSTEM, STORAGE MEDIUM, AND VEHICLE**
SPURWECHSELVERFAHREN UND -SYSTEM, SPEICHERMEDIUM UND FAHRZEUG
PROCÉDÉ ET SYSTÈME DE CHANGEMENT DE VOIE, SUPPORT D'INFORMATIONS ET VÉHICULE

(30) Priority: 27.10.2021 CN 202111254514
(43) Date of publication of application: 03.05.2023
(73) Proprietor: Nio Technology (Anhui) Co., Ltd, Hefei City, Anhui 230601 (CN)
(72) Inventor: ZHOU, Ping, Hefei City, Anhui, 230601 (CN); SUN, Sichen, Hefei City, Anhui, 230601 (CN)
(74) Representative: Vossius & Partner Patentanwälte Rechtsanwälte mbB

(56) References cited:
- EP-A1- 3 756 964
- US-A1- 2018 154 899
- US-A1- 2021 107 487

## Description

### CROSS REFERENCE TO RELATED APPLICATIONS

This application claims priority to Chinese Patent Application NO. CN202111254514.6, titled "LANE CHANGE METHOD AND SYSTEM, STORAGE MEDIUM, AND VEHICLE", filed Oct. the 27th, 2021.

### Technical Field

The invention relates to the field of autonomous driving/driving assistance of vehicles, and in particular, to a lane change method, a lane change system, a storage medium, and a vehicle.

### Background Art

Lane change is a common decision-making behavior during an autonomous driving (or driving assistance, similarly hereinafter) process. How to make an intelligent and safe lane change decision in a complex and variable environment is an important topic of autonomous driving, and also one of important indicators for autonomous driving technologies to reach a higher level. In an actual driving scenario, a current vehicle is in a highly interactive state with the surrounding environment, and surrounding vehicles may also have driving behaviors such as acceleration, deceleration, and lane change, which imposes high requirements on a decision system (in particular, an intelligent lane change function) for autonomous driving.

In the prior art, there are solutions to generating an intelligent lane change decision in the following ways. One solution is to achieve lane change by means of artificially designed rules. US 2021/107487 A1 relates to an apparatus for controlling a lane change of an autonomous vehicle and a method thereof which can perform deep learning by subdividing various situation information into groups to be considered for safety at a time of a lane change of the autonomous vehicle, and determine whether the lane change of the autonomous vehicle is possible based on the learned result, thereby drastically reducing accidents that may occur during the lane change of the autonomous vehicle. However, due to excessively complex driving scenarios, lane change conditions cannot be exhausted by means of the rules. Therefore, this solution is difficult to implement in actual applications. Another solution is to establish a machine learning model for lane change decisions by using machine learning techniques, and then make the intelligent lane change decision in different scenarios by means of this model.

### Summary of the Invention

The subject-matter of the present invention is defined by the features of the independent claims. Further preferred embodiments of the present invention are defined in the dependent claims. In particular, embodiments of the invention provide a lane change method, a lane change system, a storage medium, and a vehicle, thereby achieving intelligent, safe and efficient lane change during an autonomous driving or driving assistance process.

According to an aspect of the invention, there is provided a lane change method. The method includes the following steps: receiving condition information, the condition information including velocity information of a current vehicle, state information of an adjacent vehicle, and lane information; with the condition information as an input to a neural network, processing the condition information by means of the neural network, to obtain an initial lane change strategy; and correcting the initial lane change strategy based on a predetermined rule and the condition information, to generate and output a corrected lane change strategy, wherein the predetermined rule comprises: a velocity difference suppression rule, whereby when a difference between a desired velocity of the current vehicle and a velocity of a front vehicle in the lane where the current vehicle is located is above a first predetermined value, increasing a probability of performing lane change to an adjacent lane and reducing a probability of keeping the original lane in the initial lane change strategy.

In some embodiments of the invention, optionally, the adjacent vehicle includes a neighboring vehicle in the front, rear, left, right, left front, right front, left rear, or right rear in a traveling direction of the current vehicle.

In some embodiments of the invention, optionally, the state information includes: a lateral velocity and a longitudinal velocity of the adjacent vehicle, and a lateral distance and a longitudinal distance between the adjacent vehicle and the current vehicle.

In some embodiments of the invention, optionally, the lane information includes coefficients of fitting curves of the lane where the current vehicle is located and its adjacent lanes.

In some embodiments of the invention, optionally, the neural network is a long short-term memory neural network.

In some embodiments of the invention, optionally, the predetermined rule includes at least one of: a fast lane priority rule, whereby when the probability of keeping the original lane is below a second predetermined value and a difference between a probability of performing lane change to the adjacent left lane and that of performing lane change to the adjacent right lane is below a third threshold in the initial lane change strategy, increasing the probability of performing lane change to the left and reducing the probability of performing lane change to the right; and a decision cooling rule, whereby a lane change to the adjacent lane is restrained in the initial lane change strategy within a predetermined period of time since the last lane change of the current vehicle to the adjacent left lane.

According to another aspect of the invention, there is provided a non-transitory computer-readable medium having instructions for execution by a processor, the instructions when executed by the processor causing the processor to perform the lane change method as described above.

According to another aspect of the invention, there is provided a vehicle, including the lane change systems, wherein the lane change system comprising: a receiving unit configured to receive condition information, the condition information comprising velocity information of a current vehicle, state information of an adjacent vehicle, and lane information; a neural network unit configured to, with the condition information as an input, generate an initial lane change strategy for output; and an expert rule unit configured to correct the initial lane change strategy based on a predetermined rule and the condition information, to generate and output a corrected lane change strategy, wherein the predetermined rule comprises: a velocity difference suppression rule, whereby when a difference between a desired velocity of the current vehicle and a velocity of a front vehicle in the lane where the current vehicle is located is above a first predetermined value, increasing a probability of performing lane change to an adjacent lane and reducing a probability of keeping the original lane in the initial lane change strategy..

### Brief Description of the Drawings

The above and other objectives and advantages of the invention will be more thorough and clearer from the following detailed description in conjunction with the drawings, where the same or similar elements are represented by the same reference numerals.
FIG. 1 shows a lane change method according to an embodiment of the invention.
FIG. 2 shows a lane change system according to an embodiment of the invention.
FIG. 3 shows a lane changing scenario according to an embodiment of the invention.

### Detailed Description of Embodiments

For the sake of brevity and illustrative purposes, the principles of the invention are mainly described herein with reference to its exemplary embodiments. However, those skilled in the art can easily appreciate that the same principle can be equivalently applied to all types of lane change methods, lane change systems, storage media, and vehicles, and a same or similar principle can be implemented therein..

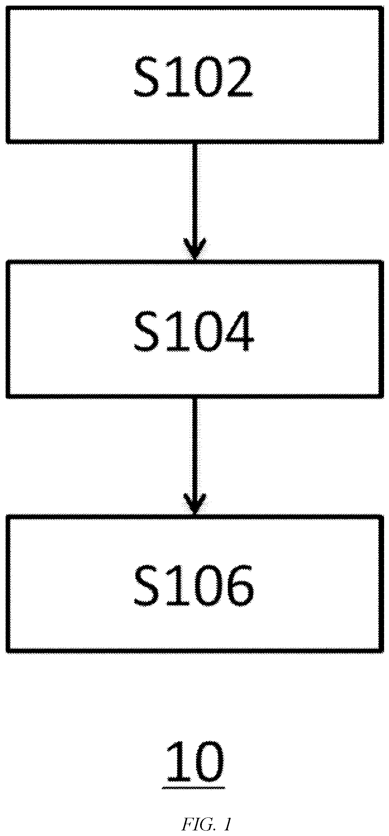

An aspect of the invention provides a lane change method. As shown in FIG. 1, the lane change method 10 includes the following steps: receiving condition information in step S 102; obtaining an initial lane change strategy with the condition information as an input to a neural network in step S 104; and correcting the initial lane change strategy based on a predetermined rule and the condition information in step S106. The lane change strategies of the invention include keeping an original lane, performing a lane change to the left, and performing a lane change to the right, with a certain probability for each strategy. In some examples, upon determination of a final strategy, a strategy having the highest probability may be selected for output. It should be noted that the term "correct" herein include a special case of maintaining the original result.

In the lane change method 10 according to some aspects of the invention, consecutive frames of condition information, which is, for example, obtained by an image sensor, etc. during a driving process is received in step S 102. The condition information includes velocity information of a current vehicle, state information of an adjacent vehicle, and lane information. Herein, the current vehicle refers to a vehicle implementing the lane change method 10, and the adjacent vehicle refers to a vehicle that is near the current vehicle and that may affect a lane change decision. The above condition information received in step S 102 is basic data for implementing the lane change method 10. Therefore, reliable condition information is the premise of generating a scientific lane change strategy. It should be noted that the focus herein is lane change in a same direction, and lanes in an opposite direction and vehicles therein are not included in the study.

In some examples, the adjacent vehicle may be a vehicle within a detectable range of an onboard detector (such as a millimeter wave radar, a laser radar, or a vision sensor). Depending on the type and number of the detector, the number of adjacent vehicles within the detectable range may vary. Selecting adjacent vehicles in this way has an advantage of more abundant data, and therefore, decisions may present higher reliability. However, if more adjacent vehicles are considered, there may be a large amount of computation, which may affect decision efficiency.

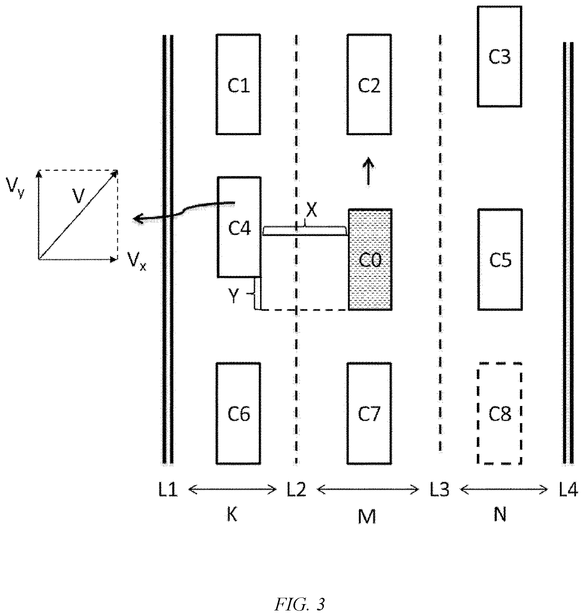

In some embodiments of the invention, several vehicles which are the most relevant to lane change can be selected from vehicles within the detectable range of the detector as the adjacent vehicles. For example, as shown in FIG. 3, the adjacent vehicles may be neighboring vehicles in front C2, rear C7, left C4, right C5, left front C1, right front C3, left rear C6, and right rear C8 in a traveling direction (a direction of arrow in front of a vehicle head in the figure) of a current vehicle C0. It should be noted that, the adjacent vehicles here refer to vehicles that may be considered in theory, and the absence of such vehicles in practice would not affect the implementation of the invention. For example, if the right-rear neighboring vehicle C8 at the illustrated position is not detected by the detector within a predetermined range, this position is set to be "null" during the implementation of various steps of the invention.

In some embodiments of the invention, with continued reference to FIG. 3, the state information of the adjacent vehicle includes a lateral velocity and a longitudinal velocity of the adjacent vehicle, and a lateral distance and a longitudinal distance between the adjacent vehicle and the current vehicle. Taking the neighboring vehicle on the left C4 as an example, the neighboring vehicle has a current velocity V, which may be decomposed into a horizontal component Vₓ (the lateral velocity) and a vertical component V_{y} (the longitudinal velocity). There is a lateral distance X and a longitudinal distance Y between the neighboring vehicle on the left C4 and the current vehicle C0. The state information will facilitate description of the state of each adjacent vehicle, from which an accurate lane change strategy can be generated.

In some embodiments of the invention, the lane information includes coefficients of fitting curves of the lane where the current vehicle is located and its adjacent lanes (if present). With continued reference to FIG. 3, a lane M where the current vehicle C0 is located shares a lane L2 with a left adjacent lane K, and shares a lane L3 with a right adjacent lane N. The left adjacent lane K also includes a lane L1, and the right adjacent lane N also includes a lane L4. In some examples of the invention, the study mainly focuses on the illustrated lanes L1, L2, L3, and L4, and therefore, the lane information includes coefficients of a fitting curve of each of the lanes L1, L2, L3, and L4.

In the lane change method 10 according to some aspects of the invention, in step S 104, with the condition information as an input to the neural network, the condition information is processed by means of the neural network, to obtain the initial lane change strategy. Before the neural network is used to process the data input in real time and generate the initial lane change strategy, the neural network may be trained by using human driving empirical data. Related training processes may be carried out according to the existing technology, and details are not repeated here.

In some embodiments of the invention, the initial lane change strategy is generated by using a long short-term memory (LSTM) neural network in step S 104. The long short-term memory neural network is a special type of recurrent neural network (RNN). Compared with general recurrent neural networks, the long short-term memory neural network may have a better performance for a longer sequence. The inventors have found during the process of research and development that compared with other types of neural networks, the long short-term memory neural network achieves a better effect in processing a vehicle autonomous lane change strategy, which allows for both a higher efficiency, and a more satisfactory lane change strategy to be generated.

In the lane change method 10 according to some aspects of the invention, in step S106, the initial lane change strategy is corrected based on the predetermined rule and the condition information, to generate and output the corrected lane change strategy. After the probability of the initial lane change strategy (e.g., keeping going straight, performing a lane change to the left or right) executed by the current vehicle in a real-time environment is obtained through step S104, a value of the probability may be further processed by a customized expert system. The expert system may optimize the result generated in step S 104 by using existing knowledge or by experience, thereby achieving a better solution to complex decision problems. Specifically, the expert system may optimize the output lane change decision on the basis of the result output by the neural network in combination with intuitive driving experience of humans during driving.

The use of the expert system has an advantage of allowing for customized addition, modification, or deletion of in-system experience, thereby making the intelligent lane change decision output more adapt to an expectation of a driver, and also more conducive to maintenance and iteration of a decision machine.

According to the invention, the predetermined rule mentioned in step S106 includes: Velocity difference suppression rule. The neural network uses driving data of human drivers for learning. For different drivers, there may be different conditions for lane change when there is a slow vehicle ahead. When processing a lane change probability given by the neural network, the expert system may first define the decision scenario as "there is a vehicle ahead, and a difference between the velocity of that vehicle and a desired driving velocity of the current vehicle is greater than a certain threshold for a certain period of time". The desired driving velocity of the current vehicle may be a representation of the current cruise velocity set by a driver. If a velocity difference suppression condition is met, a probability of each output of the neural network is revised. For example, for a scenario where a velocity difference from the vehicle ahead is large, a probability of performing a lane change to the left/right is appropriately increased, and a probability of going straight is reduced. Specifically, when a difference between a desired velocity of the current vehicle and a velocity of a front vehicle in the lane where the current vehicle is located is above a first predetermined value, a probability of performing a lane change to an adjacent lane is increased and a probability of keeping an original lane is reduced in the initial lane change strategy.

In some embodiments of the invention, the predetermined rule mentioned in step S106 may further include the following contents.
(1) Fast lane priority rule. When a probability that the output of the neural network indicates performing a lane change to one side is far greater than those of the other two outputs, it may be considered that most drivers select to perform a lane change to this side in this scenario, and the expert system then selects this direction as a lane change decision for output. When a probability that the output of the neural network indicates going straight is extremely low, but probabilities of performing a lane change to both sides are equal, it may be considered that performing a lane change to the left or right adapts to an expectation of the driver. Considering that the left lane is taken as a fast lane on most roads, and there may be a slow vehicle ahead in a right lane that has not been observed, the expert system may appropriately increase the probability of the output indicative of performing a lane change to the left, and reduce the probability of the output indicative of performing a lane change to the right, so that the overall decision tends to indicate driving to the fast lane. Specifically, when the probability of keeping the original lane is below a second predetermined value and a difference between a probability of performing a lane change to an adjacent left lane and that of performing a lane change to an adjacent right lane is below a third threshold in the initial lane change strategy, the probability of performing a lane change to the left is increased and the probability of performing a lane change to the right is reduced.
(2) Decision cooling rule. During driving, due to switching of the current vehicle between various states, there are some scenarios where frequent lane change decision making is undesired even though conditions for triggering intelligent lane change are met. For example, when the vehicle has just completed a lane change action, another lane change action at this time may increase the driver's sense of insecurity. For such a scenario, the expert system may perform identification during operation, and set a cooling time based on each scenario type. Within the cooling time, the intelligent lane change decision may be restrained by the expert system even though a driving scenario meets the condition. Specifically, a lane change to the adjacent lane is restrained in the initial lane change strategy within a predetermined period of time since the last lane change of the current vehicle to the adjacent left lane.

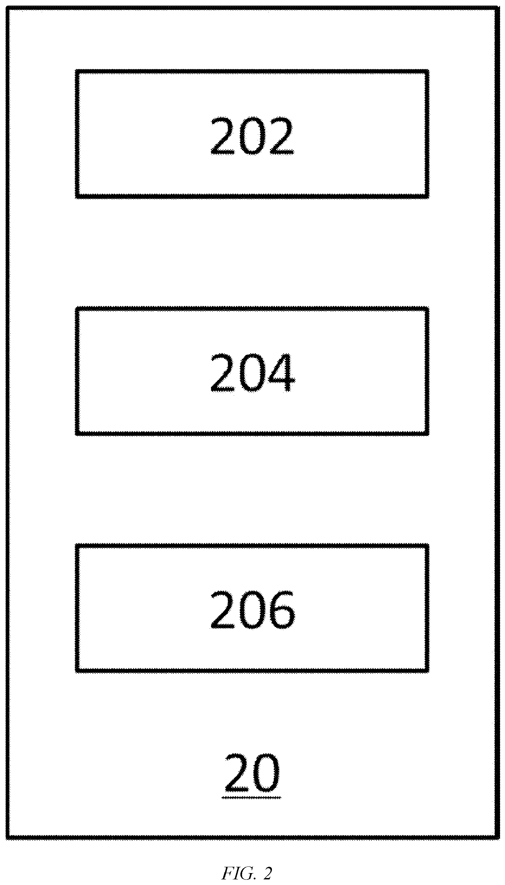

Another aspect of the invention provides a lane change system. As shown in FIG. 2, the lane change system 20 includes a receiving unit 202, a neural network unit 204, and an expert rule unit 206. Although shown to be separate in the figure, the unit modules may be integrated. For example, the neural network unit 204 and the expert rule unit 206 may be implemented by using a special-purpose or general-purpose processor (assisted with a necessary storage device).

The receiving unit 202 of the lane change system 20 is configured to receive consecutive frames of condition information, which is, for example, obtained by an image sensor, etc. during a driving process, the condition information including velocity information of a current vehicle, state information of an adjacent vehicle, and lane information. Herein, the current vehicle may refer to a vehicle to which the lane change system 20 belongs, and the adjacent vehicle refers to a vehicle that is near the current vehicle and that may affect a lane change decision. The above condition information received by the receiving unit 202 is basic data for continuous operation of the lane change system 20. Therefore, reliable condition information is the premise of generating a scientific lane change strategy. It should be noted that the focus herein is lane change in a same direction, and lanes in an opposite direction and vehicles therein are not included in the study.

In some examples, the adjacent vehicle may be a vehicle within a detectable range of an onboard detector (such as a millimeter wave radar, a laser radar, or a vision sensor). Depending on the type and number of the detector, the number of adjacent vehicles within the detectable range may vary. Selecting adjacent vehicles in this way has an advantage of more abundant data, and therefore, decisions may present higher reliability. However, if more adjacent vehicles are considered, there may be a large amount of computation, which may affect decision efficiency.

In some embodiments of the invention, the lane change system 20 may select, from vehicles within the detectable range of a vehicle detector (not shown in the figure), several vehicles, which are the most relevant to lane change, as the adjacent vehicles. For example, as shown in FIG. 3, the adjacent vehicles may be neighboring vehicles in front C2, rear C7, left C4, right C5, left front C1, right front C3, left rear C6, and right rear C8 in a traveling direction (a direction of arrow in front of a vehicle head in the figure) of a current vehicle C0. It should be noted that, the adjacent vehicles here refer to vehicles that may be considered in theory, and the absence of such vehicles in practice would not affect the implementation of the invention. For example, if the right-rear neighboring vehicle C8 at the illustrated position is not detected by the detector within a predetermined range, the lane change system 20 may set this position to be "null".

In some embodiments of the invention, with continued reference to FIG. 3, the state information of the adjacent vehicle includes a lateral velocity and a longitudinal velocity of the adjacent vehicle, and a lateral distance and a longitudinal distance between the adjacent vehicle and the current vehicle. Taking the neighboring vehicle on the left C4 as an example, the neighboring vehicle has a current velocity V, which may be decomposed into a horizontal component Vₓ (the lateral velocity) and a vertical component V_{y} (the longitudinal velocity). There is a lateral distance X and a longitudinal distance Y between the neighboring vehicle on the left C4 and the current vehicle C0. The state information will facilitate description of states of each adjacent vehicle, from which the lane change system 20 can then generate an accurate lane change strategy.

In some embodiments of the invention, the lane information includes coefficients of fitting curves of the lane where the current vehicle is located and its adjacent lanes (if present). With continued reference to FIG. 3, a lane M where the current vehicle C0 is located shares a lane line L2 with a left adjacent lane K, and shares a lane L3 with a right adjacent lane N. The left adjacent lane K also includes a lane L1, and the right adjacent lane N also includes a lane L4. In some examples of the invention, the study mainly focuses on the illustrated lanes L1, L2, L3, and L4, and therefore, the lane information considered by the lane change system 20 includes coefficients of a fitting curve of each of the lanes L 1, L2, L3, and L4.

The neural network unit 204 of the lane change system 20 is configured to, with the condition information as an input, generate an initial lane change strategy for output. Before the neural network unit 204 is used to process the data input in real time and generate the initial lane change strategy, the neural network unit 204 may be trained by using human driving empirical data. Related training processes may be carried out according to the existing technology, and details are not repeated here.

In some embodiments of the invention, the neural network unit 204 is composed of a long short-term memory neural network. The long short-term memory neural network is a special type of recurrent neural network. Compared with general recurrent neural networks, the long short-term memory neural network may have a better performance for a longer sequence. The inventors have found during the process of research and development that compared with other types of neural networks, the long short-term memory neural network achieves a better effect in processing a vehicle autonomous lane change strategy, which allows for both a higher efficiency, and a more satisfactory lane change strategy to be generated.

The expert rule unit 206 of the lane change system 20 is configured to correct the initial lane change strategy based on a predetermined rule and the condition information, to generate and output a corrected lane change strategy. After the probability of the initial lane change strategy (e.g., keeping going straight, performing a lane change to the left or right) executed by the current vehicle in a real-time environment is obtained by the neural network unit 204, a value of the probability may be further processed by the customized expert rule unit 206. The expert rule unit 206 may optimize the result generated by the neural network unit 204 by using existing knowledge or by experience, thereby achieving a better solution to complex decision problems. Specifically, the expert rule unit 206 may optimize the output lane change decision on the basis of the result output by the neural network unit 204 in combination with intuitive driving experience of humans during driving.

The use of the expert system has an advantage of allowing for customized addition, modification, or deletion of in-system experience, thereby making the intelligent lane change decision output more adapt to an expectation of a driver, and also more conducive to maintenance and iteration of a decision machine.

In some embodiments of the invention, the predetermined rule used by the expert rule unit 206 may include the following aspects. (1) Velocity difference suppression rule. For basic principles of this rule, reference may be made to the above description, and details are not repeated here. Specifically, when a difference between a desired velocity of the current vehicle and a velocity of a front vehicle in the lane where the current vehicle is located is above a first predetermined value, a probability of performing a lane change to an adjacent lane is increased and a probability of keeping an original lane is reduced in the initial lane change strategy. (2) Fast lane priority rule. For basic principles of this rule, reference may be made to the above description, and details are not repeated here. Specifically, when the probability of keeping the original lane is below a second predetermined value and a difference between a probability of performing a lane change to an adjacent left lane and that of performing a lane change to an adjacent right lane is below a third threshold in the initial lane change strategy, the probability of performing a lane change to the left is increased and the probability of performing a lane change to the right is reduced. (3) Decision cooling rule. For basic principles of this rule, reference may be made to the above description, and details are not repeated here. Specifically, a lane change to the adjacent lane is restrained in the initial lane change strategy within a predetermined period of time since the last lane changing of the current vehicle to the adjacent left lane.

Another aspect of the invention provides a vehicle including any one of the lane change systems as described above. The vehicle equipped with the lane change system may achieve intelligent, safe and efficient lane change during an autonomous driving or driving assistance process.

According to another aspect of the invention, there is provided a non-transitory computer-readable medium having instructions for execution by a processor, the instructions when executed by the processor causing the processor to perform the lane change methods as described above. The non-transitory computer-readable medium in the invention includes various types of computer storage media, and may be any usable medium accessible to a general-purpose or special-purpose computer. For example, the non-transitory computer-readable medium may include a RAM, a ROM, an EPROM, an EEPROM, a register, a hard disk, a removable hard disk, a CD-ROM or another optical memory, a magnetic disk memory or another magnetic storage device, or any other transitory or non-transitory media that can carry or store expected program code having an instruction or data structure form and be accessible to the general-purpose or special-purpose computer or a general-purpose or special-purpose processor. Data is usually copied magnetically in a disk used herein, while data is usually copied optically by using lasers in a disc. A combination thereof shall also fall within the scope of protection of the non-transitory computer-readable media. An exemplary storage medium is coupled to a processor, so that the processor can read information from and write information to the storage medium. In an alternative solution, the storage medium may be integrated into the processor. The processor and the storage medium may reside in an ASIC. The ASIC may reside in a user terminal. In an alternative solution, the processor and the storage medium may reside as discrete assemblies in a user terminal.

Some of the above examples of the invention provide solutions to making an intelligent lane change decision for an autonomous vehicle in a complex driving environment. According to the solutions, an intelligent and safe lane change decision may be automatically generated based on current lane information, a continuous operating state of a surrounding vehicle, a continuous operating state of a current vehicle, etc. A control system of an autonomous driving system may implement a lane change action according to this lane change decision.

The foregoing descriptions are merely the embodiments of the invention, but are not intended to limit the scope of protection of the invention. Without conflicts, the embodiments of the invention and features in the embodiments may also be combined with each other. The scope of protection of the invention remains defined by the appended claims.

## Claims

1. A lane change method (10), comprising the following steps:
receiving condition information, the condition information comprising velocity information of a current vehicle, state information of an adjacent vehicle, and lane information (S102);
with the condition information as an input to a neural network, processing the condition information by means of the neural network, to obtain an initial lane change strategy (S104); and
correcting the initial lane change strategy based on a predetermined rule and the condition information, to generate and output a corrected lane change strategy (S 106),
**characterized in that** the predetermined rule comprises:
a velocity difference suppression rule, whereby when a difference between a desired velocity of the current vehicle and a velocity of a front vehicle in the lane where the current vehicle is located is above a first predetermined value, increasing a probability of performing lane change to an adjacent lane and reducing a probability of keeping the original lane in the initial lane change strategy.

2. The method (10) according to claim 1, wherein the adjacent vehicle comprises a neighboring vehicle in the front, rear, left, right, left front, right front, left rear, and right rear in a traveling direction of the current vehicle.

3. The method (10) according to claim 1 or 2, wherein the state information comprises: a lateral velocity and a longitudinal velocity of the adjacent vehicle, and a lateral distance and a longitudinal distance between the adjacent vehicle and the current vehicle.

4. The method (10) according to claim 1, 2, or 3, wherein the lane information comprises coefficients of fitting curves of the lane where the current vehicle is located and its adjacent lanes.

5. The method (10) according to any one of claims 1 to 4, wherein the neural network is a long short-term memory neural network.

6. The method (10) according to any one of claims 1 to 5, wherein the predetermined rule further comprises at least one of:
a fast lane priority rule, whereby when the probability of keeping the original lane is below a second predetermined value and a difference between a probability of performing lane change to the adjacent left lane and that of performing lane change to the adjacent right lane is below a third threshold in the initial lane change strategy, increasing the probability of performing lane change to the left and reducing the probability of performing lane change to the right; and
a decision cooling rule, whereby a lane change to the adjacent lane is restrained in the initial lane change strategy within a predetermined period of time since the last lane change of the current vehicle to the adjacent left lane.

7. A non-transitory computer-readable medium having instructions for execution by a processor, the instructions when executed by the processor causing the processor to perform a lane change method, the lane change method (10) comprising:
receiving condition information, the condition information comprising velocity information of a current vehicle, state information of an adjacent vehicle, and lane information (S102);
with the condition information as an input to a neural network, processing the condition information by means of the neural network, to obtain an initial lane change strategy (S104); and
correcting the initial lane change strategy based on a predetermined rule and the condition information, to generate and output a corrected lane change strategy (S 106),
**characterized in that** the predetermined rule comprises:
a velocity difference suppression rule, whereby when a difference between a desired velocity of the current vehicle and a velocity of a front vehicle in the lane where the current vehicle is located is above a first predetermined value, increasing a probability of performing lane change to an adjacent lane and reducing a probability of keeping the original lane in the initial lane change strategy.

8. The non-transitory computer-readable medium according to claim 7, wherein the adjacent vehicle comprises a neighboring vehicle in the front, rear, left, right, left front, right front, left rear, or right rear in a traveling direction of the current vehicle.

9. The non-transitory computer-readable medium according to claim 7 or 8, wherein the state information comprises: a lateral velocity and a longitudinal velocity of the adjacent vehicle, and a lateral distance and a longitudinal distance between the adjacent vehicle and the current vehicle.

10. The non-transitory computer-readable medium according to claim 7, 8, or 9, wherein the lane information comprises coefficients of fitting curves of the lane where the current vehicle is located and its adjacent lanes.

11. The non-transitory computer-readable medium according to any one of claims 7 to 10, wherein the neural network unit is composed of a long short-term memory neural network.

12. The non-transitory computer-readable medium according to any one of claims 7 to 10, wherein the predetermined rule further comprises at least one of:
a fast lane priority rule, whereby when the probability of keeping the original lane is below a second predetermined value and a difference between a probability of performing lane change to the adjacent left lane and that of performing lane change to the adjacent right lane is below a third threshold in the initial lane change strategy, increasing the probability of performing lane change to the left and reducing the probability of performing lane change to the right; and
a decision cooling rule, whereby a lane change to the adjacent lane is restrained in the initial lane change strategy within a predetermined period of time since the last lane change of the current vehicle to the adjacent left lane.

13. A vehicle, comprising a lane change system (20), wherein the lane change system comprising:
a receiving unit (202) configured to receive condition information, the condition information comprising velocity information of a current vehicle, state information of an adjacent vehicle, and lane information;
a neural network unit (204) configured to, with the condition information as an input, generate an initial lane change strategy for output;
and an expert rule unit (206) configured to correct the initial lane change strategy based on a predetermined rule and the condition information, to generate and output a corrected lane change strategy, **characterized in that** the predetermined rule comprises:
a velocity difference suppression rule, whereby when a difference between a desired velocity of the current vehicle and a velocity of a front vehicle in the lane where the current vehicle is located is above a first predetermined value, increasing a probability of performing lane change to an adjacent lane and reducing a probability of keeping the original lane in the initial lane change strategy.

## Patentansprüche

1. Fahrstreifenwechselverfahren (10), aufweisend die folgenden Schritte:
Empfangen von Zustandsinformationen, wobei die Zustandsinformationen Geschwindigkeitsinformationen eines aktuellen Fahrzeugs, Zustandsinformationen eines benachbarten Fahrzeugs und Fahrstreifeninformationen aufweisen (S102);
mit den Zustandsinformationen als Eingabe für ein neuronales Netz, Verarbeiten der Zustandsinformationen mittels des neuronalen Netzes, um eine anfängliche Fahrstreifenwechselstrategie zu erhalten (S104); und
Korrigieren der anfänglichen Fahrstreifenwechselstrategie basierend auf einer vorbestimmten Regel und den Zustandsinformationen, um eine korrigierte Fahrstreifenwechselstrategie (S106) zu erzeugen und auszugeben, **dadurch gekennzeichnet, dass** die vorbestimmte Regel aufweist:
eine Geschwindigkeitsdifferenzunterdrückungsregel, wodurch, wenn eine Differenz zwischen einer Sollgeschwindigkeit des aktuellen Fahrzeugs und einer Geschwindigkeit eines vorderen Fahrzeugs auf dem Fahrstreifen, auf dem sich das aktuelle Fahrzeug befindet, über einem ersten vorbestimmten Wert liegt, eine Wahrscheinlichkeit des Durchführens eines Fahrstreifenwechsels auf einen benachbarten Fahrstreifen erhöht und eine Wahrscheinlichkeit des Beibehaltens des ursprünglichen Fahrstreifens in der anfänglichen Fahrstreifenwechselstrategie verringert wird.

2. Verfahren (10) nach Anspruch 1, wobei das benachbarte Fahrzeug ein benachbartes Fahrzeug vorne, hinten, links, rechts, vorne links, vorne rechts, hinten links und hinten rechts in einer Fahrtrichtung des aktuellen Fahrzeugs umfasst.

3. Verfahren (10) nach Anspruch 1 oder 2, wobei die Zustandsinformationen aufweisen: eine Quergeschwindigkeit und eine Längsgeschwindigkeit des benachbarten Fahrzeugs und einen Querabstand und einen Längsabstand zwischen dem benachbarten Fahrzeug und dem aktuellen Fahrzeug.

4. Verfahren (10) nach Anspruch 1, 2 oder 3, wobei die Fahrstreifeninformationen Koeffizienten von Anpassungskurven des Fahrstreifens, auf dem sich das aktuelle Fahrzeug befindet, und dessen benachbarten Fahrstreifen umfassen.

5. Verfahren (10) nach einem der Ansprüche 1 bis 4, wobei das neuronale Netz ein neuronales Netz mit langem Kurzzeitgedächtnis ist.

6. Verfahren (10) nach einem der Ansprüche 1 bis 5, wobei die vorbestimmte Regel ferner mindestens eines aufweist von:
einer Schnellfahrstreifenprioritätsregel, wodurch, wenn die Wahrscheinlichkeit des Beibehaltens des ursprünglichen Fahrstreifens unter einem zweiten vorbestimmten Wert liegt und eine Differenz zwischen einer Wahrscheinlichkeit des Durchführens eines Fahrstreifenwechsels auf den benachbarten linken Fahrstreifen und derjenigen des Durchführens eines Fahrstreifenwechsels auf den benachbarten rechten Fahrstreifen unter einem dritten Schwellenwert in der anfänglichen Fahrstreifenwechselstrategie liegt, die Wahrscheinlichkeit des Durchführens eines Fahrstreifenwechsels nach links erhöht und die Wahrscheinlichkeit des Durchführens eines Fahrstreifenwechsels nach rechts verringert wird; und
eine Entscheidungsabkühlungsregel, bei der ein Fahrstreifenwechsel auf den benachbarten Fahrstreifen in der anfänglichen Fahrstreifenwechselstrategie innerhalb einer vorbestimmten Zeitspanne seit dem letzten Fahrstreifenwechsel des aktuellen Fahrzeugs auf den benachbarten linken Fahrstreifen eingeschränkt wird.

7. Nichtflüchtiges computerlesbares Medium mit Anweisungen zur Ausführung durch einen Prozessor, wobei die Anweisungen, wenn sie durch den Prozessor ausgeführt werden, den Prozessor veranlassen, ein Fahrstreifenwechselverfahren durchzuführen, wobei das Fahrstreifenwechselverfahren (10) aufweist:
Empfangen von Zustandsinformationen, wobei die Zustandsinformationen Geschwindigkeitsinformationen eines aktuellen Fahrzeugs, Zustandsinformationen eines benachbarten Fahrzeugs und Fahrstreifeninformationen aufweisen (S102);
mit den Zustandsinformationen als Eingabe für ein neuronales Netz, Verarbeiten der Zustandsinformationen mittels des neuronalen Netzes, um eine anfängliche Fahrstreifenwechselstrategie zu erhalten (S104); und
Korrigieren der anfänglichen Fahrstreifenwechselstrategie basierend auf einer vorbestimmten Regel und den Zustandsinformationen, um eine korrigierte Fahrstreifenwechselstrategie (S106) zu erzeugen und auszugeben, **dadurch gekennzeichnet, dass** die vorbestimmte Regel aufweist:
eine Geschwindigkeitsdifferenzunterdrückungsregel, wodurch, wenn eine Differenz zwischen einer Sollgeschwindigkeit des aktuellen Fahrzeugs und einer Geschwindigkeit eines vorderen Fahrzeugs auf dem Fahrstreifen, auf dem sich das aktuelle Fahrzeug befindet, über einem ersten vorbestimmten Wert liegt, eine Wahrscheinlichkeit des Durchführens eines Fahrstreifenwechsels auf einen benachbarten Fahrstreifen erhöht und eine Wahrscheinlichkeit des Beibehaltens des ursprünglichen Fahrstreifens in der anfänglichen Fahrstreifenwechselstrategie verringert wird.

8. Nichtflüchtiges computerlesbares Medium nach Anspruch 7, wobei das benachbarte Fahrzeug ein benachbartes Fahrzeug vorne, hinten, links, rechts, vorne links, vorne rechts, hinten links oder hinten rechts in einer Fahrtrichtung des aktuellen Fahrzeugs umfasst.

9. Nichtflüchtiges computerlesbares Medium nach Anspruch 7 oder 8, wobei die Zustandsinformationen aufweisen: eine Quergeschwindigkeit und eine Längsgeschwindigkeit des benachbarten Fahrzeugs und einen Querabstand und einen Längsabstand zwischen dem benachbarten Fahrzeug und dem aktuellen Fahrzeug.

10. Nichtflüchtiges computerlesbares Medium nach Anspruch 7, 8 oder 9, wobei die Fahrstreifeninformationen Koeffizienten von Anpassungskurven des Fahrstreifens, auf dem sich das aktuelle Fahrzeug befindet, und dessen benachbarten Fahrstreifen umfassen.

11. Nichtflüchtiges computerlesbares Medium nach einem der Ansprüche 7 bis 10, wobei die neuronale Netzeinheit aus einem neuronalen Netz mit langem Kurzzeitgedächtnis besteht.

12. Nichtflüchtiges computerlesbares Medium nach einem der Ansprüche 7 bis 10, wobei die vorbestimmte Regel ferner mindestens eines aufweist von:
einer Schnellfahrstreifenprioritätsregel, wodurch, wenn die Wahrscheinlichkeit des Beibehaltens des ursprünglichen Fahrstreifens unter einem zweiten vorbestimmten Wert liegt und eine Differenz zwischen einer Wahrscheinlichkeit des Durchführens eines Fahrstreifenwechsels auf den benachbarten linken Fahrstreifen und derjenigen des Durchführens eines Fahrstreifenwechsels auf den benachbarten rechten Fahrstreifen unter einem dritten Schwellenwert in der anfänglichen Fahrstreifenwechselstrategie liegt, die Wahrscheinlichkeit des Durchführens eines Fahrstreifenwechsels nach links erhöht und die Wahrscheinlichkeit des Durchführens eines Fahrstreifenwechsels nach rechts verringert wird; und
eine Entscheidungsabkühlungsregel, bei der ein Fahrstreifenwechsel auf den benachbarten Fahrstreifen in der anfänglichen Fahrstreifenwechselstrategie innerhalb einer vorbestimmten Zeitspanne seit dem letzten Fahrstreifenwechsel des aktuellen Fahrzeugs auf den benachbarten linken Fahrstreifen eingeschränkt wird.

13. Fahrzeug, aufweisend ein Fahrstreifenwechselsystem (20), wobei das Fahrstreifenwechselsystem aufweist:
eine Empfangseinheit (202), die dazu ausgelegt ist, Zustandsinformationen zu empfangen, wobei die Zustandsinformationen Geschwindigkeitsinformationen eines aktuellen Fahrzeugs, Zustandsinformationen eines benachbarten Fahrzeugs und Fahrstreifeninformationen aufweisen;
eine neuronale Netzwerkeinheit (204), die dazu ausgelegt ist, mit den Zustandsinformationen als Eingabe eine anfängliche Fahrstreifenwechselstrategie als Ausgabe zu erzeugen;
und eine Expertenregeleinheit (206), die dazu ausgelegt ist, die anfängliche Fahrstreifenwechselstrategie basierend auf einer vorbestimmten Regel und den Zustandsinformationen zu korrigieren, um eine korrigierte Fahrstreifenwechselstrategie zu erzeugen und auszugeben, **dadurch gekennzeichnet, dass** die vorbestimmte Regel aufweist:
eine Geschwindigkeitsdifferenzunterdrückungsregel, wodurch, wenn eine Differenz zwischen einer Sollgeschwindigkeit des aktuellen Fahrzeugs und einer Geschwindigkeit eines vorderen Fahrzeugs auf dem Fahrstreifen, auf dem sich das aktuelle Fahrzeug befindet, über einem ersten vorbestimmten Wert liegt, eine Wahrscheinlichkeit des Durchführens eines Fahrstreifenwechsels auf einen benachbarten Fahrstreifen erhöht und eine Wahrscheinlichkeit des Beibehaltens des ursprünglichen Fahrstreifens in der anfänglichen Fahrstreifenwechselstrategie verringert wird.

## Revendications

1. Procédé de changement de voie (10), comprenant les étapes suivantes :
la réception d'informations de condition, les informations de condition comprenant des informations de vitesse d'un véhicule actuel, des informations d'état d'un véhicule adjacent, et des informations de voie (S102) ;
avec les informations de condition en tant qu'entrée dans un réseau neuronal, le traitement des informations de condition au moyen du réseau neuronal, pour obtenir une stratégie initiale de changement de voie (S104) ; et
la correction de la stratégie initiale de changement de voie sur la base d'une règle prédéterminée et des informations de condition, pour générer et produire en sortie une stratégie corrigée de changement de voie (S106), **caractérisé en ce que** la règle prédéterminée comprend :
une règle de suppression de différence de vitesse, moyennant quoi, lorsqu'une différence entre une vitesse souhaitée du véhicule actuel et une vitesse d'un véhicule avant dans la voie où le véhicule actuel est situé est supérieure à une première valeur prédéterminée, une probabilité de la réalisation d'un changement de voie à une voie adjacente est augmentée et une probabilité du maintien la voie d'origine dans la stratégie initiale de changement de voie est réduite.

2. Procédé (10) selon la revendication 1, dans lequel le véhicule adjacent comprend un véhicule voisin à l'avant, à l'arrière, à gauche, à droite, à l'avant à gauche, à l'avant à droite, à l'arrière à gauche, et à l'arrière à droite dans une direction de déplacement du véhicule actuel.

3. Procédé (10) selon la revendication 1 ou 2, dans lequel les informations d'état comprennent : une vitesse latérale et une vitesse longitudinale du véhicule adjacent, et une distance latérale et une distance longitudinale entre le véhicule adjacent et le véhicule actuel.

4. Procédé (10) selon la revendication 1, 2, ou 3, dans lequel les informations de voie comprennent des coefficients de courbes d'ajustement de la voie où le véhicule actuel est situé et ses voies adjacentes.

5. Procédé (10) selon l'une quelconque des revendications 1 à 4, dans lequel le réseau neuronal est un réseau neuronal à mémoire à court-terme longue.

6. Procédé (10) selon l'une quelconque des revendications 1 à 5, dans lequel la règle prédéterminée comprend en outre au moins une de :
une règle de priorité de voie rapide, moyennant quoi, lorsque la probabilité du maintien la voie d'origine est inférieure à une deuxième valeur prédéterminée et une différence entre une probabilité de la réalisation d'un changement de voie à la voie gauche adjacente et celle de la réalisation d'un changement de voie à la voie droite adjacente est inférieure à un troisième seuil dans la stratégie initiale de changement de voie, la probabilité de la réalisation d'un changement de voie sur la gauche est augmentée et la probabilité de la réalisation d'un changement de voie sur la droite est réduite ; et
une règle de réflexion de décision, moyennant quoi un changement de voie à la voie adjacente est restreint, dans la stratégie initiale de changement de voie, dans les limites d'un laps de temps prédéterminé depuis le dernier changement de voie du véhicule actuel à la voie gauche adjacente.

7. Support non transitoire lisible par ordinateur ayant des instructions pour l'exécution par un processeur, les instructions, lorsqu'elles sont exécutées par le processeur, amenant le processeur à réaliser un procédé de changement de voie, le procédé de changement de voie (10) comprenant :
la réception d'informations de condition, les informations de condition comprenant des informations de vitesse d'un véhicule actuel, des informations d'état de an véhicule adjacent, et des informations de voie (S102) ;
avec les informations de condition en tant qu'entrée dans un réseau neuronal, le traitement des informations de condition au moyen du réseau neuronal, pour obtenir une stratégie initiale de changement de voie (S104) ; et
la correction de la stratégie initiale de changement de voie sur la base d'une règle prédéterminée et des informations de condition, pour générer et produire en sortie une stratégie corrigée de changement de voie (S106), **caractérisé en ce que** la règle prédéterminée comprend :
une règle de suppression de différence de vitesse, moyennant quoi, lorsqu'une différence entre une vitesse souhaitée du véhicule actuel et une vitesse d'un véhicule avant dans la voie où le véhicule actuel est situé est supérieure à une première valeur prédéterminée, une probabilité de la réalisation d'un changement de voie à une voie adjacente est augmentée et une probabilité du maintien la voie d'origine dans la stratégie initiale de changement de voie est réduite.

8. Support non transitoire lisible par ordinateur selon la revendication 7, dans lequel le véhicule adjacent comprend un véhicule voisin à l'avant, à l'arrière, à gauche, à droite, à l'avant à gauche, à l'avant à droite, à l'arrière à gauche, ou à l'arrière à droite dans une direction de déplacement du véhicule actuel.

9. Support non transitoire lisible par ordinateur selon la revendication 7 ou 8, dans lequel les informations d'état comprennent : une vitesse latérale et une vitesse longitudinale du véhicule adjacent, et une distance latérale et une distance longitudinale entre le véhicule adjacent et le véhicule actuel.

10. Support non transitoire lisible par ordinateur selon la revendication 7, 8, ou 9, dans lequel les informations de voie comprennent des coefficients de courbes d'ajustement de la voie où le véhicule actuel est situé et ses voies adjacentes.

11. Support non transitoire lisible par ordinateur selon l'une quelconque des revendications 7 à 10, dans lequel l'unité de réseau neuronal est composée d'un réseau neuronal à mémoire à court-terme longue.

12. Support non transitoire lisible par ordinateur selon l'une quelconque des revendications 7 à 10, dans lequel la règle prédéterminée comprend en outre au moins une de :
une règle de priorité de voie rapide, moyennant quoi, lorsque la probabilité du maintien la voie d'origine est inférieure à une deuxième valeur prédéterminée et une différence entre une probabilité de la réalisation d'un changement de voie à la voie gauche adjacente et celle de la réalisation d'un changement de voie à la voie droite adjacente est inférieure à un troisième seuil dans la stratégie initiale de changement de voie, la probabilité de la réalisation d'un changement de voie sur la gauche est augmentée et la probabilité de la réalisation d'un changement de voie sur la droite est réduite ; et
une règle de réflexion de décision, moyennant quoi un changement de voie à la voie adjacente est restreint, dans la stratégie initiale de changement de voie, dans les limites d'un laps de temps prédéterminé depuis le dernier changement de voie du véhicule actuel à la voie gauche adjacente.

13. Véhicule, comprenant un système de changement de voie (20), dans lequel le système de changement de voie comprend :
une unité de réception (202) configurée pour recevoir des informations de condition, les informations de condition comprenant des informations de vitesse d'un véhicule actuel, des informations d'état d'un véhicule adjacent, et des informations de voie ;
une unité de réseau neuronal (204) configurée pour, avec les informations de condition en tant qu'entrée, générer une stratégie initiale de changement de voie destinée à être produite en sortie ;
et une unité de règle experte (206) configurée pour corriger la stratégie initiale de changement de voie sur la base d'une règle prédéterminée et des informations de condition, pour générer et produire en sortie une stratégie corrigée de changement de voie, **caractérisé en ce que** la règle prédéterminée comprend :
une règle de suppression de différence de vitesse, moyennant quoi, lorsqu'une différence entre une vitesse souhaitée du véhicule actuel et une vitesse d'un véhicule avant dans la voie où le véhicule actuel est situé est supérieure à une première valeur prédéterminée, une probabilité de la réalisation d'un changement de voie à une voie adjacente est augmentée et une probabilité du maintien la voie d'origine dans la stratégie initiale de changement de voie est réduite.
